(19) **Europäisches Patentamt**
**European Patent Office**
**Office européen des brevets**

(11) **EP 2 031 223 B1**

(12) **EUROPEAN PATENT SPECIFICATION**

(45) Date of publication and mention
of the grant of the patent:
**24.05.2017 Bulletin 2017/21**

(51) Int Cl.:
*F02D 41/14* *(2006.01)*   *F02D 41/02* *(2006.01)*
*F02D 41/00* *(2006.01)*   *F02D 41/12* *(2006.01)*
*F02D 41/40* *(2006.01)*

(21) Application number: **08252871.2**

(22) Date of filing: **29.08.2008**

(54) **Controller for internal combustion engine**

Regler für Verbrennungsmotor

Contrôleur pour moteur à combustion interne

(84) Designated Contracting States:
**DE ES FR GB IT**

(30) Priority: **31.08.2007 JP 2007226234**

(43) Date of publication of application:
**04.03.2009 Bulletin 2009/10**

(73) Proprietor: **TOYOTA JIDOSHA KABUSHIKI KAISHA**
**Toyota-shi, Aichi-ken, 471-8571 (JP)**

(72) Inventors:
• **Saigo, Yusuke**
**Toyota-shi**
**Aichi-ken 471-8571 (JP)**
• **Ito, Yoshiyasu**
**Toyota-shi**
**Aichi-ken 471-8571 (JP)**

• **Matsunaga, Akio**
**Toyota-shi**
**Aichi-ken 471-8571 (JP)**
• **Tsuchiyama, Makio**
**Toyota-shi**
**Aichi-ken 471-8571 (JP)**
• **Ota, Masayoshi**
**Toyota-shi**
**Aichi-ken 471-8571 (JP)**

(74) Representative: **Smith, Samuel Leonard**
**J A Kemp**
**14 South Square**
**Gray's Inn**
**London WC1R 5JJ (GB)**

(56) References cited:
**WO-A1-99/41521       JP-A- S5 985 443**
**JP-A- H09 217 639**

## Description

The present invention relates to a controller for an internal combustion engine that transmits output to a drive system with a dual mass flywheel.

A technique that employs a dual mass flywheel to suppress the transmission of torque fluctuation of an internal combustion engine to a drive system is known in the art. Such technique is disclosed in for example, Japanese Laid-Open Patent Publication No. 2005-54601 (pp. 5-9, Figs. 2 to 5) and Japanese Laid-Open Patent Publication No. 2006-183484 (pp. 3-5, Fig. 2). A dual mass flywheel includes two flywheels and elastic bodies such as springs that connect the flywheels. The dual mass flywheel has a resonance frequency. When resonance occurs, the amplitude of vibrations in each of the two flywheels increases. As a result, the springs hit the flywheels and produces shocks. This may inflict damages to the dual mass flywheel.

In order to prevent resonance in such a dual mass flywheel, the dual mass flywheel is normally designed to have a resonance point set to be in an engine speed range that is lower than an idle speed. However, the engine speed may temporarily become lower than the idle speed depending on the operation state of the internal combustion engine. In such cases, the setting of the resonance point in such a manner cannot sufficiently prevent resonance of the dual flywheel.

In Japanese Laid-Open Patent Publication No. 2005-54601, when the engine speed of the internal combustion engine remains in the resonance speed range for a predetermined time, the engine speed is separated from the resonance speed range by stopping or reducing the supply of fuel.

In Japanese Laid-Open Patent Publication No. 2006-183484, when the engine speed of the internal combustion engine is lower than the idle speed, the maximum fuel injection amount is reduced as the engine speed becomes lower.

A further method for detecting torsional oscillations of a drive system is presented in JP H09 217639 A.

However, it cannot be determined whether the dual mass flywheel is actually resonating when using only the engine speed of the internal combustion engine. Thus, unnecessary fuel injection amount limiting control may be executed even though the dual mass flywheel is not resonating. This may delay recovery of the engine speed when the engine speed is lower than the idle speed or increase the frequency of engine stalls.

If fuel injection amount limiting control is not executed even though the dual mass flywheel is continuously resonating, the springs may hit the dual mass flywheel and produce shocks thereby inflicting damages to the dual mass flywheel.

It is an object of the present invention to prevent such problems by accurately determining when the dual mass flywheel enters an initial resonance stage and coping with the resonance at an appropriate timing.

According to the present invention, there is provided a controller for an internal combustion engine as defined in appended claim 1.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

Fig. 1 is a schematic block diagram showing the structure of a first embodiment of an internal combustion according to the present invention and a drive system and control system of the internal combustion engine;

Fig. 2 is a flowchart of a resonance prevention process executed by the ECU shown in Fig. 1;

Fig. 3 is a flowchart of a crankshaft rotation speed fluctuation ω detection process executed by the ECU shown in Fig. 1;

Fig. 4 is a timing chart showing one example of the control executed in the first embodiment;

Fig. 5 is a flowchart of a resonance prevention process in a second embodiment of the present invention;

Figs. 6A to 6D are graphs each showing a processing example of step S210 shown in Fig. 5;

Fig. 7 is a graph showing another processing example of step S210 shown in Fig. 5;

Fig. 8 is a flowchart of a resonance warning process in a third embodiment of the present invention;

Fig. 9 is a timing chart showing one example of the control executed in the third embodiment;

Fig. 10 is a flowchart of a resonance prevention process in a fourth embodiment of the present invention; and

Fig. 11 is a timing chart showing one example of the control executed in the fourth embodiment.

A first embodiment will be described as example for the invention. Furthermore, a second, third and fourth embodiment will be described as examples not forming part of the invention.

[First Embodiment]

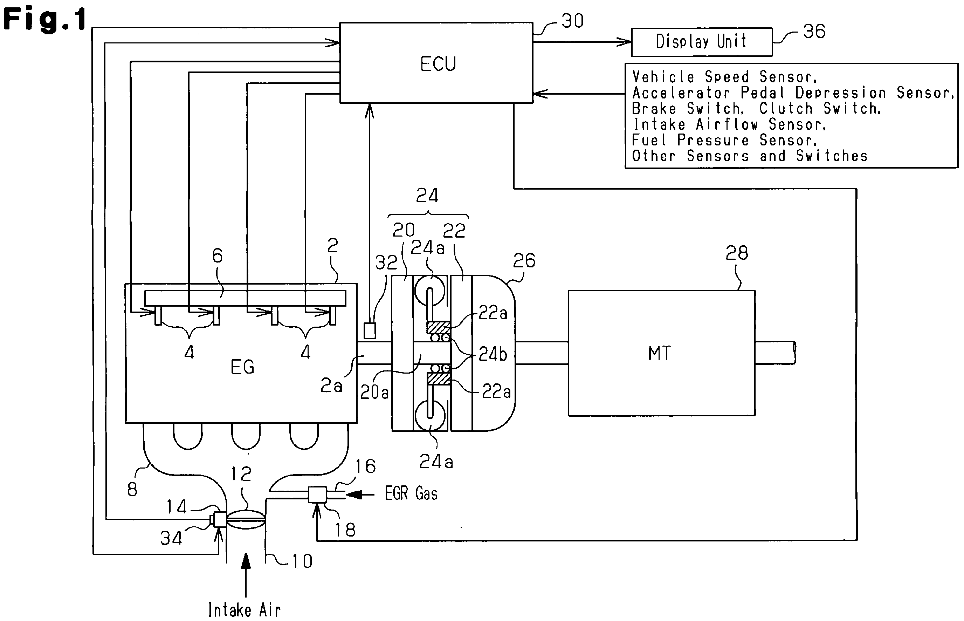

Fig. 1 is a schematic block diagram showing the structure of a diesel engine (hereinafter referred to as the engine) 2 and a drive system and control system of the engine 2. The engine 2 serves as a vehicle driving internal combustion engine to which the present invention is applied. Further, the engine 2 is a four-cylinder in-line engine and includes fuel injection valves 4, each directly injecting fuel into a combustion chamber defined in the associated cylinder.

The fuel injection valves 4 are connected to a common rail 6, which accumulates fuel until it reaches a predetermined pressure. The common rail 6 is supplied with pressurized fuel from a fuel pump driven by the engine 2. The pressurized fuel is distributed to the fuel injection valves 4 of the cylinders from the common rail 6. When a predetermined drive current is applied to each fuel injection valve 4, the fuel injection valve 4 opens and injects pressurized fuel into the corresponding cylinder.

An intake manifold 8 is connected to the engine 2. The intake manifold 8 includes branched pipes, each connected to the combustion chamber of a corresponding cylinder through an intake port. The intake manifold 8 is connected to an intake pipe 10. A diesel throttle valve (hereinafter referred to as the throttle) 12 is arranged in the intake pipe 10 to throttle the flow of air in the intake pipe 10. An electric actuator 14 adjusts the open degree of the throttle 12. An intercooler, a compressor for a turbo charger, and an air cleaner are arranged in the intake pipe 10 upstream the throttle 12.

An exhaust gas recirculation passage (EGR passage) 16 is connected to the intake pipe 10 downstream the throttle 12. A flow rate adjustment EGR valve 18 is arranged in the EGR passage 16. Some of the exhaust gas flowing through an exhaust passage of the engine 2 is guided as EGR gas to the upstream side of the EGR valve 18 in the EGR passage 16. The EGR gas is drawn into the intake pipe 10 through the EGR valve 18.

In the exhaust passage, the flow of exhaust gas generates energy that rotates a turbine of the turbo charger. The exhaust gas that rotates the turbine is discharged from the exhaust passage after being processed by an exhaust gas purification catalyst.

Output of the engine 2 is transmitted to a manual transmission (hereinafter referred to as the MT) 28 through a dual mass flywheel (hereinafter referred to as the DMF) 24 and a clutch 26. The DMF 24 includes a primary flywheel 20 and a secondary flywheel 22. The clutch 26 is arranged between the secondary flywheel 22 and the MT 28.

The primary flywheel 20 and the secondary flywheel 22 are connected by springs 24a. A rotation shaft 20a of the primary flywheel 20 and a rotation shaft 22a of the secondary flywheel 22 are connected in a relatively rotatable manner by bearings 24b. The output of the engine 2 is transmitted from a crankshaft 2a to the MT 28 through the DMF 24. Fluctuations in the output of the engine 2 is effectively absorbed and reduced by the springs 24a of the DMF 24. This suppresses torsion vibrations in the drive system during normal operations and accordingly reduces the generation of noise and vibrations in an effective manner.

The engine 2 is provided with an electronic control unit (ECU) 30 for controlling the engine. The ECU 30 is a control circuit for controlling the engine in accordance with the engine operation state or requests from the driver and includes a microcomputer incorporating a CPU, a ROM, a RAM, a backup RAM, and the like.

The ECU 30 receives signals from a crankshaft rotation speed sensor 32 (rotation speed detection means), which detects the rotation speed of the crankshaft 2a, and a throttle sensor 34, which detects the opening of the throttle 12. Furthermore, the ECU 30 receives signals from a vehicle speed sensor, an accelerator pedal depression sensor, a brake switch, a clutch switch, an intake airflow sensor, a fuel pressure sensor, and other sensors and switches.

The ECU 30 calculates the optimal fuel injection amount and fuel injection timing through various calculation processes based on the input signals to adjust the open degree of the throttle 12, the open degree of the EGR valve 18, and the like. Information for notification of the state of the vehicle and the engine 2 to the driver are displayed when necessary by an LCD or a lamp on a display unit 36, which is arranged on a dashboard.

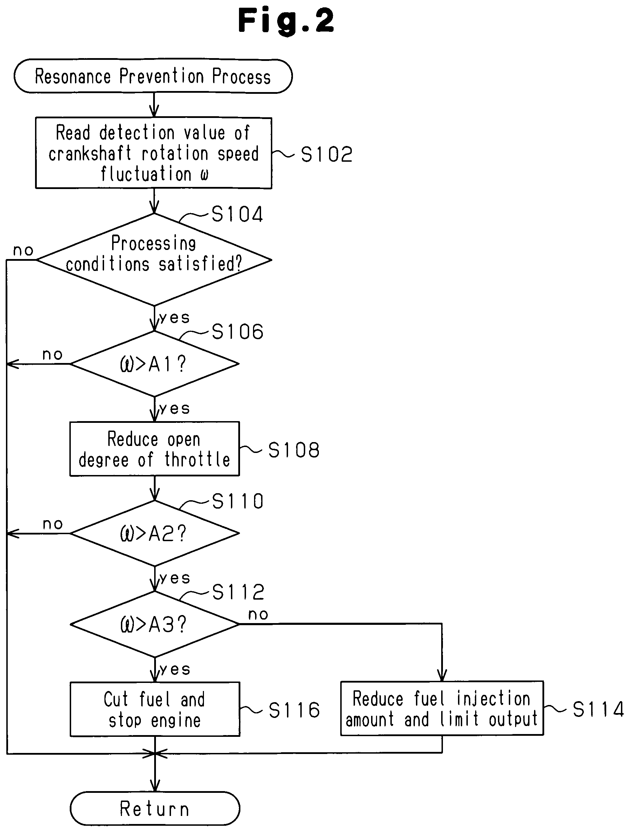

A resonance prevention process executed by the ECU 30 will now be described with reference to the flowchart of Fig. 2. This process is executed constant cycles.

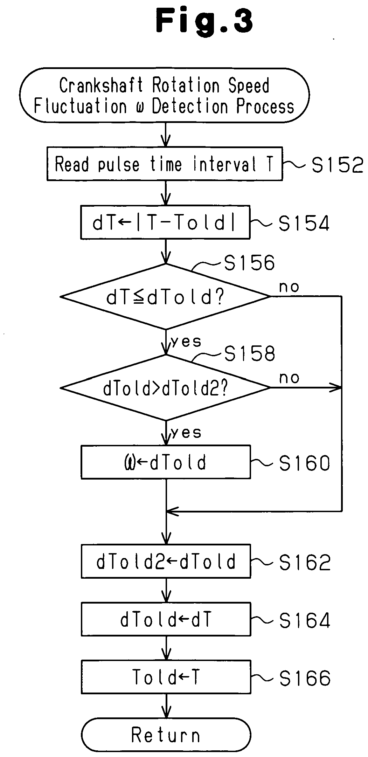

When the resonance prevention process is started, in step S102, the ECU 30 reads the detection value of a fluctuation ω (level of fluctuation) in the rotation speed of the crankshaft 2a and inputs the detection value to a work region in the RAM of the ECU 30. The fluctuation ω is detected through a crankshaft rotation speed fluctuation detection process as shown in the flowchart of Fig. 3. The detection process shown in Fig. 3 will now be described. This process is executed whenever the crankshaft rotation speed sensor 32 outputs a pulse signal.

First, in step S152, a pulse time interval T of the crankshaft rotation speed sensor 32 is input to the work region of the RAM. The crankshaft rotation speed sensor 32 outputs a pulse signal to the ECU 30 whenever the crankshaft 2a is rotated by a constant rotation angle of 10°CA (CA: Crank Angle) in this embodiment. The time interval T between pulse signals corresponding to the constant rotation angle is measured whenever a pulse signal is input to the ECU 30 (every 10° CA rotation). In step S152, the ECU 30 reads the measured pulse time interval T.

As shown in equation 1, an absolute value of the difference between the pulse time interval T read in the present processing cycle and the pulse time interval Told read in the previous processing cycle is calculated as a time interval variation dT.

$$[\text{Equation 1}] \quad dT \leftarrow |T - Told|$$

In step S156, the ECU 30 determines whether or not the present time interval variation dT is smaller than or equal to the previous time interval variation dTold. If dT > dTold is satisfied, in step S162, a time interval variation dTold2, which was calculated in step S154 during the cycle before the previous one, is set as the previous time interval variation dTold. Then, in step S164, the present time interval variation dT is set as the previous time interval variation dTold. In step S166, the present pulse time interval T is set as the previous pulse time interval Told. Then, the processing is temporarily terminated.

In step S156, if $dT \leq dTold$ is satisfied, the ECU 30 proceeds to step S158 and determined whether or not the previous time interval variation dTold is larger than the time interval variation dTold2, which was calculated during the cycle before the previous one. If $dTold \leq dTold2$ is satisfied, the processes of steps S162 to S166 that are described above are executed. Then, the processing is temporarily terminated.

If determined that $dTold > dTold2$ in step S158, the previous time interval variation dTold is set as the crankshaft rotation speed fluctuation $\omega$ in step S160.

In other words, if affirmative determinations are made in steps S156 and S158, the relationship of $dT \leq dTold > dTold2$ is established among the three successively detected time interval variations dT, dTold, and dTold2.

The time interval T of the pulse output by the crankshaft rotation speed sensor 32 becomes shorter as the rotation speed of the crankshaft 2a increases and longer as the rotation speed decreases. That is, the pulse time interval T is the physical quantity corresponding to the rotation speed of the crankshaft 2a, and the variation of the time interval T is the physical quantity corresponding to the crankshaft rotational acceleration. Thus, the peak value of the crankshaft rotational acceleration corresponds to the maximum value of variations in the pulse time interval T.

The rotation speed fluctuation $\omega$ increases as the peak value of the rotational acceleration increases, and the rotation speed fluctuation w decreases as the peak value of the rotational acceleration decreases. Therefore, the time interval variation dT corresponds to the physical quantity representing the crankshaft rotation speed fluctuation $\omega$. In steps S152 to S158, the ECU 30 determines that the previous time interval variation dTold corresponds to the maximum value (peak value). Thus, in step S160, the previous time interval variation dTold is set as the crankshaft rotation speed fluctuation $\omega$. Step S156 includes $dT = dTold$. This is to take into consideration a case in which the pulse intervals of the previous cycle and the current cycle that are near the peak value of the rotational acceleration are the same.

The crankshaft rotation speed fluctuation detection process shown in Fig. 3 is executed in subsequent cycles whenever a pulse is output from the crankshaft rotation speed sensor 32. Affirmative determinations are made in step S156 and step S158 if a peak value of the time interval variation dT is found. The crankshaft rotation speed fluctuation $\omega$ is updated by the value of the time interval variation dTold calculated during the previous cycle in step S160.

Returning to Fig. 2, when reading the crankshaft rotation speed fluctuation $\omega$ that is detected through the processing of Fig. 3 in step S102, the ECU 30 proceeds to step S104 and determines whether predetermined processing conditions are satisfied.

The predetermined processing conditions are satisfied when the engine speed NE, which is detected by the crankshaft rotation speed sensor 32, is lower than a reference speed, which is set to be lower than an engine stall prevention threshold speed but higher than a resonance rotation speed of the DMF 24. The engine stall prevention threshold speed is set to prevent engine stall. The predetermined processing conditions are used to avoid resonance of the DMF 24 without lowering the engine stall resistance characteristics. As will be described in the section labeled "Other Embodiments", further logical inclusion conditions may be added to the processing conditions.

If the predetermined processing conditions are not satisfied in step S104, the processing is temporarily terminated. If the predetermined processing conditions are satisfied, the ECU 30 proceeds to step S106 and determines whether the crankshaft rotation speed fluctuation $\omega$ read in step S102 is greater than a first reference value A1. The first reference value A1 is an initial reference value representing a state in which the engine speed NE approaches a value that may cause resonance of the DMF 24. If $\omega \leq A1$ is satisfied in step S106, the ECU 30 determines that the crankshaft rotation speed fluctuation $\omega$ is sufficiently small and that the resonance of the DMF 24 is less likely to occur. Thus, the ECU 30 temporarily terminates processing.

If $\omega > A1$ is satisfied in step S106, the ECU 30 proceeds to step S108 and reduces the open degree of the throttle 12 by a constant degree with the electric actuator 14. This suppresses fluctuations in the output of the engine 2 and the occurrence of resonance in the DMF 24.

In step S110, the ECU 30 determines whether the crankshaft rotation speed fluctuation $\omega$ is greater than a second reference value A2. The second reference value A2 is greater than the first reference value A1 and represents a state in which the engine speed NE further approaches the value that may cause resonance of the DMF 24 from the first reference value A1. If $\omega \leq A2$ is satisfied in step S110, the ECU 30 determines that resonance can be sufficiently suppressed by reducing the open degree of the throttle 12. Thus, the ECU 30 temporarily terminates processing.

If $\omega > A2$ is satisfied in step S110, the ECU 30 proceeds to step S112 and determines whether the crankshaft rotation speed fluctuation $\omega$ is greater than a third reference value A3. The third reference value A3 is greater than the second reference value A2 and represents a state in which the engine speed NE further approaches the value that may cause resonance of the DMF 24 from the second reference value A2. If $\omega \leq A3$ is satisfied in step S112, the ECU 30 proceeds to step S114 and limits the engine output by reducing the fuel injection amount. In addition to the throttle opening reduction process of step S108, the ECU 30 executes the fuel injection amount reduction process of step S114 to suppress fluctuations in the engine output and the occurrence of resonance in the DMF 24.

If ω > A3 is satisfied in step S112, the ECU 30 proceeds to step S116 and executes a process for suppressing fluctuations in the engine output more forcibly than when ω ≤ A 3 is satisfied by cutting the supply of fuel, that is, stopping fuel injection. In this manner, the fuel supply is cut in step S116 in addition to the throttle opening reduction process being executed in step S108. Thus, the engine speed NE quickly passes by the resonance point of the DMF 24 and the engine 2 stops running. This prevents the resonance of the DMF 24 from becoming strong when lowering the engine speed NE and prevents damages from being inflicted to the DMF 24.

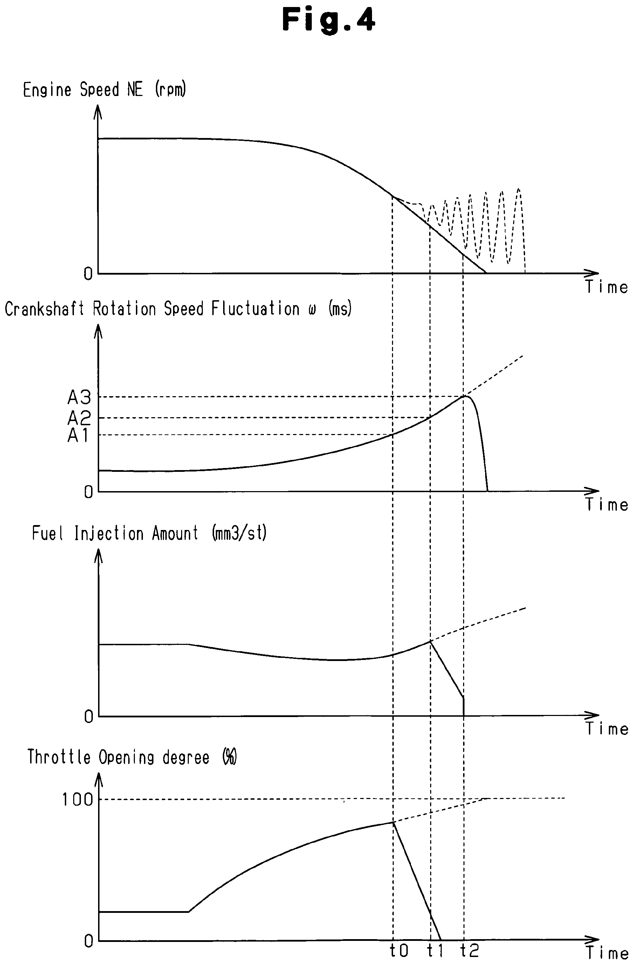

One example of control executed in this embodiment is illustrated in the timing chart of Fig. 4. Before timing t0, ω ≤ A1 is satisfied. Thus, resonance will not occur in the DMF 24 and the engine output is not lowered. When ω > A1 is satisfied at timing t0, the open degree of the throttle 12 is reduced and the intake air is narrowed down in step S108 of Fig. 2. In this example, the crankshaft rotation speed fluctuation ω gradually rises even if the opening of the throttle 12 is reduced by a constant degree.

When ω>A2 at timing t1, positive determination is made in step S106 and step S110 and negative determination is made in step S112 of Fig. 2. In this case, as shown in Fig. 2, the intake air is decreased by the throttle 12 in step S108, and the fuel injection amount is reduced in step S114. In this example, the crankshaft rotation speed fluctuation ω gradually rises even though the open degree of the throttle 12 is reduced and the fuel injection amount is reduced.

When ω > A3 is satisfied at timing t2, affirmative determinations are made in step S106, step S110, and step S112. In such a case, the intake air decreased by the throttle 12 in step S108, and the supply of fuel is cut in step S116.

The broken lines in Fig. 4 show an example in which the resonance prevention process of Fig. 2 is not executed thereby eventually resulting in a large resonance.

In the first embodiment, the ECU 30 corresponds to a crankshaft rotation speed fluctuation detection means and an output fluctuation adjustment means. The crankshaft rotation speed fluctuation detection process illustrated in Fig. 3 corresponds to a process executed by the crankshaft rotation speed fluctuation detection means, and steps S104 to S116 of the resonance prevention process illustrated in Fig. 2 correspond to the processes executed by the output fluctuation adjustment means.

The first embodiment has the advantages described below.

(1) Fluctuations in the rotation speed of the crankshaft 2a are amplified by the resonance of the DMF 24. Therefore, the crankshaft rotation speed fluctuation ω detected through the crankshaft rotation speed fluctuation detection process illustrated in Fig. 3 is compared with the reference values A1, A2, and A3 to determine the resonance level of the DMF 24.

Furthermore, when the crankshaft rotation speed fluctuation ω becomes greater than the reference values A1, A2, and A3, the resonance prevention process illustrated in Fig. 2 is executed in accordance with the resonance level to reduce or eliminate engine output fluctuations and thereby reduce or eliminate the resonance of the DMF 24.

When the crankshaft rotation speed fluctuation ω becomes greater than the first reference value A1, the open degree of the throttle 12 is decreased. This reduces fluctuation in the output of the engine 2 and reduces or eliminates resonance in the initial resonance stage of the DMF 24.

When the crankshaft rotation speed fluctuation ω becomes greater than the second reference value A2, the open degree of the throttle 12 is decreased and the amount of fuel supplied to each cylinder is reduced. This reduces or eliminates resonance when the crankshaft rotation speed fluctuation ω further approaches a value that may cause resonance of the DMF 24 from the first reference value A1.

When the crankshaft rotation speed fluctuation ω becomes greater than the third reference value A3, the open degree of the throttle 12 is decreased and the supply of fuel to each cylinder is stopped. This stops the engine and quickly lowers the engine speed NE when the crankshaft rotation speed fluctuation ω further approaches the value that may cause resonance of the DMF 24 from the second reference value A2. Thus, resonance is reduced, and the engine speed NE quickly passes by the resonance point so as to ultimately eliminate the state of resonance.

In this manner, the ECU 30 accurately determines each state in the initial stage of resonance for the DMF 24 to reduce or eliminate the engine output fluctuation at appropriate timings in a manner that is suitable for each situation.

(2) The predetermined processing conditions shown in step S104 must be satisfied for the resonance prevention process shown in Fig. 2 to be substantially effective. Specifically, the engine speed NE must be lower than a reference speed, which is set to be lower than an engine stall prevention threshold speed but higher than a resonance rotation speed of the DMF 24. Thus, since the reference speed is lower than the engine stall prevention threshold speed, the intake air is reduced, the fuel injection amount is reduced, and the supply of fuel is cut when the engine speed NE is lower than the engine stall prevention threshold speed. Thus, resonance of the DMF 24 is avoided without lowering the engine stall resistance characteristics.

[Second Embodiment]

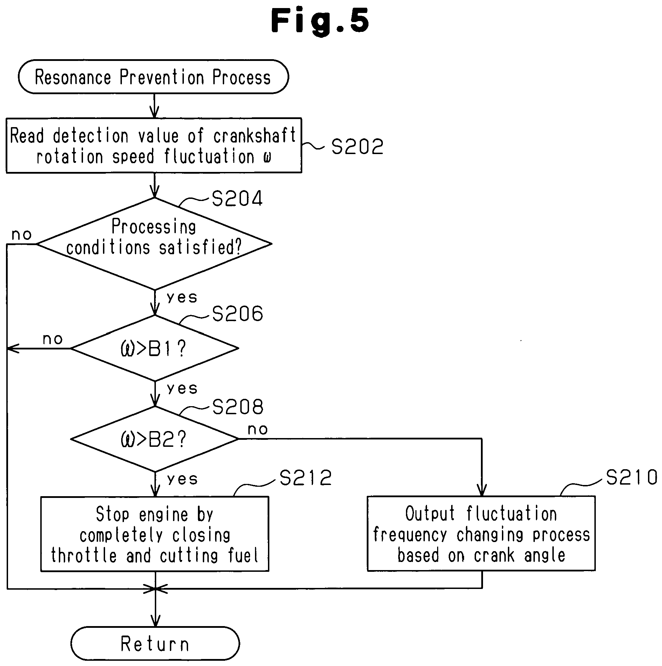

In the second embodiment, a resonance prevention process shown in Fig. 5 is executed in constant cycles in lieu of the process in the first embodiment that is shown in Fig. 2. Otherwise, the second embodiment is the same as the first embodiment and will thus be discussed with reference to Figs. 1 and 3.

When the resonance prevention process shown in Fig. 5 starts, in step S202, the ECU 30 reads the detection value of a fluctuation ω in the rotation speed of the crankshaft 2a and inputs the detection value to a work region in the RAM of the ECU 30. The detection value of the crankshaft rotation speed fluctuation ω is detected through the crankshaft rotation speed fluctuation detection process mentioned in the description of the first embodiment and illustrated in Fig. 3.

Then, in step S204, the ECU 30 determines whether or not the predetermined processing conditions are satisfied. This process is the same as step S104 of Fig. 2.

If the predetermined processing conditions are not satisfied, the processing is temporarily terminated. If the processing conditions are satisfied, the ECU 30 proceeds to step S206 and determines whether the crankshaft rotation speed fluctuation ω read in step S202 in the present cycle is greater than a first reference value B1. The first reference value B1 is an initial reference value representing a state in which the engine speed NE approaches a value that may cause resonance of the DMF 24. If ω ≤ B1 is satisfied in step S206, the ECU 30 determines that the crankshaft rotation speed fluctuation ω is sufficiently small and that resonance will not occur in the DMF 24. Thus, the processing is temporarily terminated.

If ω > B1 is satisfied in step S206, the ECU 30 proceeds to step S208 and determines whether the crankshaft rotation speed fluctuation ω is greater than a second reference value B2. The second reference value B2 is greater than the first reference value B1 and represents a state in which the engine speed NE is further approached to the value that may cause resonance of the DMF 24 from the first reference value B1. If ω ≤ B2 is satisfied in step S208, the ECU 30 proceeds to step S210 and executes a process for changing the output fluctuation frequency of the engine 2 based on the crank angle. That is, the ECU 30 changes the output fluctuation frequency using values of the crank angle as a time axis.

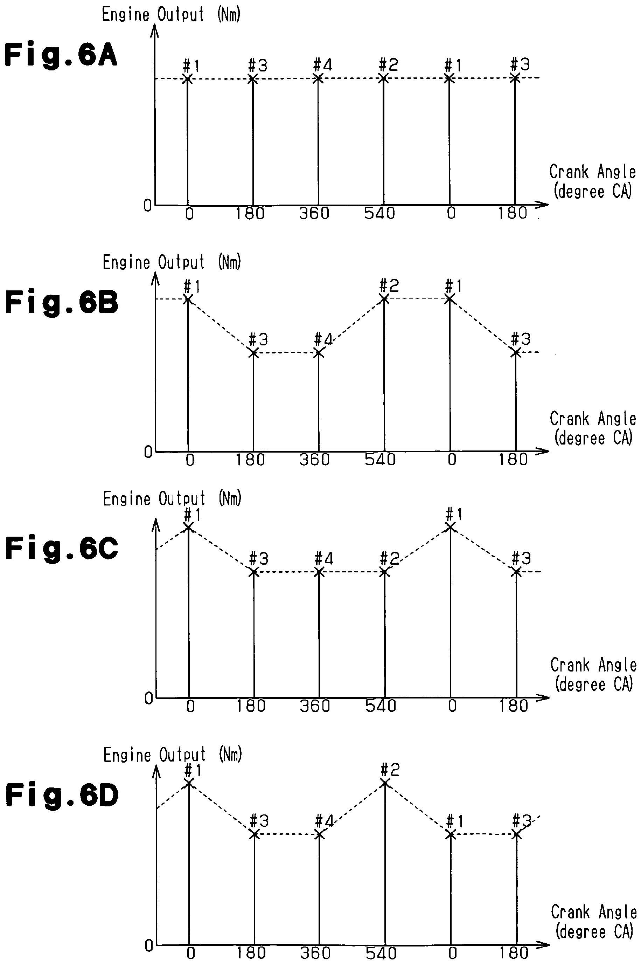

If the engine 2 is a four-cylinder engine, a combustion stroke is performed every 180°CA as shown in Fig. 6A. Thus, two output peaks appear during a single rotation of the crankshaft 2a. For example, when NE = 180rpm is satisfied, the output fluctuation frequency on the time axis is 6 Hz.

The process for changing the output fluctuation frequency in step S210 changes the state shown in Fig. 6A to one of the states shown in Figs. 6B to 6D.

In the processing shown in Fig. 6B, the output of two of the cylinders (#1 and #2) is increased by supplying more fuel, and the output of the other two cylinders (#3 and #4) is accordingly decreased by supplying less fuel. Such increase and decrease in the output of the cylinders produces high output for every 720°CA during the combustion strokes of the set of cylinders #2 and #1 so that one output peak appears in every two rotations of the crankshaft 2a. Therefore, when NE = 180rpm is satisfied, the output fluctuation frequency on the time axis is 1.5 Hz.

In the processing shown in Fig. 6C, the output of one of the cylinders(#1) is increased by supplying more fuel, and the output of the other three cylinders (#2, #3, #4) is accordingly decreased by supplying less fuel. Such increase and decrease in the output of the cylinders produces high output for every 720°CA during the combustion strokes so that one output peak appears in every two rotations of the crankshaft 2a. Therefore, when NE = 180 rpm is satisfied, the output fluctuation frequency on the time axis is 1.5 Hz.

In the processing shown in Fig. 6D, a combination of one cylinder having a high output and two cylinders accordingly having a low output is repeated. Such increase and decrease in the output of the cylinders produces high output for every 540°CA during the combustion strokes so that one output peak appears in every 1.5 rotations of the crankshaft 2a. Therefore, when NE = 180 rpm is satisfied, the output fluctuation frequency on the time axis is 2 Hz.

If the fuel injection amount is the same for the four cylinders as shown in Fig. 6A, the output fluctuation frequency is 6 Hz when the engine speed NE is 180 rpm. However, the output fluctuation frequency can be quickly changed from 6 Hz to 1.5 Hz or 2 Hz by increasing or decreasing the output of the combustion stroke for each cylinder by varying the fuel injection amount between cylinders as shown in Figs. 6B to 6D.

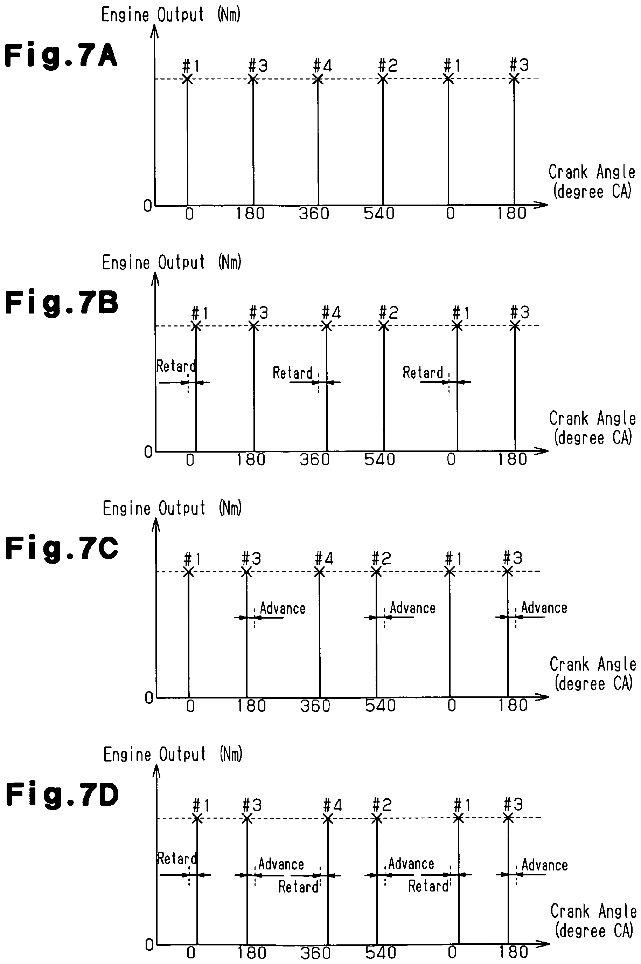

Output is increased and decreased in the cylinders as shown in Fig. 6. Instead, referring to Figs. 7A to 7D, the output fluctuation frequency may be changed by retarding the fuel injection timings in cylinders #1 and #4 from the state shown in Fig. 7A to generate high output at an interval of 360°CA as shown in Fig. 7B.

From the state shown in Fig. 7A, the output fluctuation frequency may also be changed by advancing the fuel injection timing of cylinders #2 and #3 so that the engine 2 has a high output at an interval of 360°CA as shown in Fig. 7C. Alternatively, the output fluctuation frequency may be changed by retarding the fuel injection timing of the cylinders #1 and #4 and advancing the fuel injection timing of cylinders #2 and #3 so that the engine 2 has a high output at an interval of 360°CA as shown in Fig. 7D.

By narrowing the interval between injection timings in such a manner, a single high output is produced with a pair of combustions strokes during a single rotation of the crankshaft 2a. Thus, when the engine speed NE is 180 rpm, the output fluctuation frequency on the time axis is 3 Hz, and the output fluctuation frequency can be quickly changed from 6 Hz of Fig. 7(A).

In step S210, a process for changing the output fluctuation frequency based on the crank angle is performed by executing either one or both of varying the fuel injection amount for the cylinders and varying the fuel injection timing for the cylinders. Through such a change, the output fluctuation frequency on the time axis can be immediately changed even if the engine speed NE does not change. Thus, the processing is temporarily terminated.

In step S208, if $\omega$ > B2 is satisfied, the ECU 30 proceeds to step S212 and completely closes the throttle 12 and stops fuel injection from the fuel injection valves 4 to perform fuel cut. This starts to stop the engine 2. Thus, the engine speed NE quickly passes by the resonance point. This suppresses the occurrence of resonance in the DMF 24.

If a negative determination is made in step S204 or step S206, the varying of the fuel injection amount for the cylinders and the varying of the fuel injection timing for the cylinders as shown in Figs. 6A and 7A are not performed.

In the second embodiment, the ECU 30 corresponds to a crankshaft rotation speed fluctuation detection means and an output fluctuation adjustment means. The detection process of the crankshaft rotation speed fluctuation shown in Fig. 3 corresponds to a process serving as a crankshaft rotation speed fluctuation detection means, and steps S204 to S212 of the resonance prevention process shown in Fig. 5 correspond to a processes serving as the output fluctuation adjustment means.

The second embodiment has the advantages described above.

(1) The processes of steps S204 to S210 of the resonance prevention process shown in Fig. 5 changes the engine output fluctuation frequency based on the crank angle. Thus, when the crankshaft rotation speed fluctuation $\omega$ becomes greater than the first reference value B1, the output fluctuation frequency on the time axis is quickly changed without changing the engine speed NE. This separates the output fluctuation frequency from the resonance point of the DMF 24 and reduces or eliminates resonance of the DMF 24.

Furthermore, when the crankshaft rotation speed fluctuation $\omega$ becomes greater than the second reference value B2, the throttle 12 is completely closed and fuel cut is performed. Thus, when the crankshaft rotation speed fluctuation $\omega$ further approaches the resonance of the DMF 24 from the first reference value B1, the engine speed NE is quickly reduced by stopping the engine 2 so as to quickly pass by the resonance point and ultimately eliminate resonance.

In this manner, the ECU 30 accurately determines each state in the initial stage of resonance for the DMF 24 to change the output fluctuation frequency and reduce or eliminate the engine output fluctuation at appropriate timings in a manner that is suitable for each situation.

(2) The same advantage as advantage (2) of the first embodiment is obtained.

[Third Embodiment]

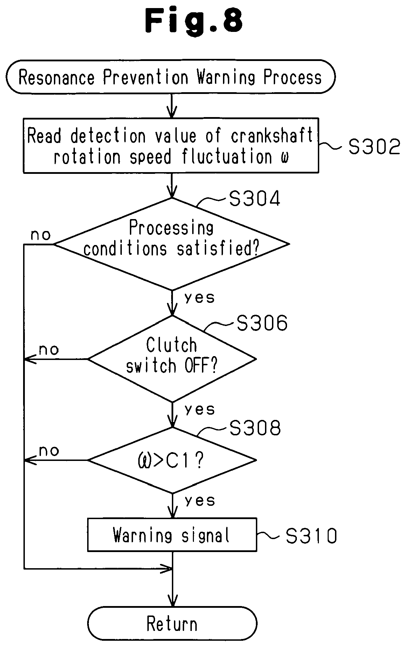

In the third embodiment, a resonance warning process shown in Fig. 8 is executed in constant cycles in lieu of the process in the first embodiment that is shown in Fig. 2. Otherwise, the third embodiment is the same as the first embodiment and will thus be discussed with reference to Figs. 1 and 3.

When the resonance warning process shown in Fig. 8 is started, the ECU 30 reads the detection value of a fluctuation $\omega$ in the rotation speed of the crankshaft 2a and inputs the detection value to a work region in the RAM of the ECU 30. The detection value of the crankshaft rotation speed fluctuation w is detected through the crankshaft rotation speed fluctuation detection process mentioned in the description of the first embodiment and illustrated in Fig. 3.

Then, in step S304, the ECU 30 determines whether or not the predetermined processing conditions are satisfied. This process is the same as step S104 of Fig. 2.

If the predetermined processing conditions are not satisfied, the processing is temporarily terminated. If the processing conditions are satisfied, the ECU 30 proceeds to step S306 and determines whether a clutch switch (clutch sensor) is deactivated. If the clutch switch is activated, that is, if the clutch 26 is not in a state of engagement, the processing is temporarily terminated.

If the clutch switch is deactivated, that is, if the clutch 26 is in a state of engagement, the ECU 30 proceeds to step S308 and determines whether the crankshaft rotation speed fluctuation $\omega$ read in step S302 in the present cycle is greater than a reference value C1. The reference value C1 represents a state in which the engine speed NE approaches a value that may cause resonance of the DMF 24. If $\omega \leq$ C1 is satisfied in step S308, the ECU 30 determines that the crankshaft rotation speed fluctuation $\omega$ is sufficiently small and that resonance of the DMF 24 will not occur. Thus, the processing is temporarily terminated.

If $\omega$ > C1 is satisfied in step S308, the ECU 30 proceeds to step S310 and sends a warning signal to the display unit 36 to prompt the driver to disengage the clutch 26. This lights or flashes a warning lamp arranged on the display unit 36 and prompts the driver to disengage the clutch 26.

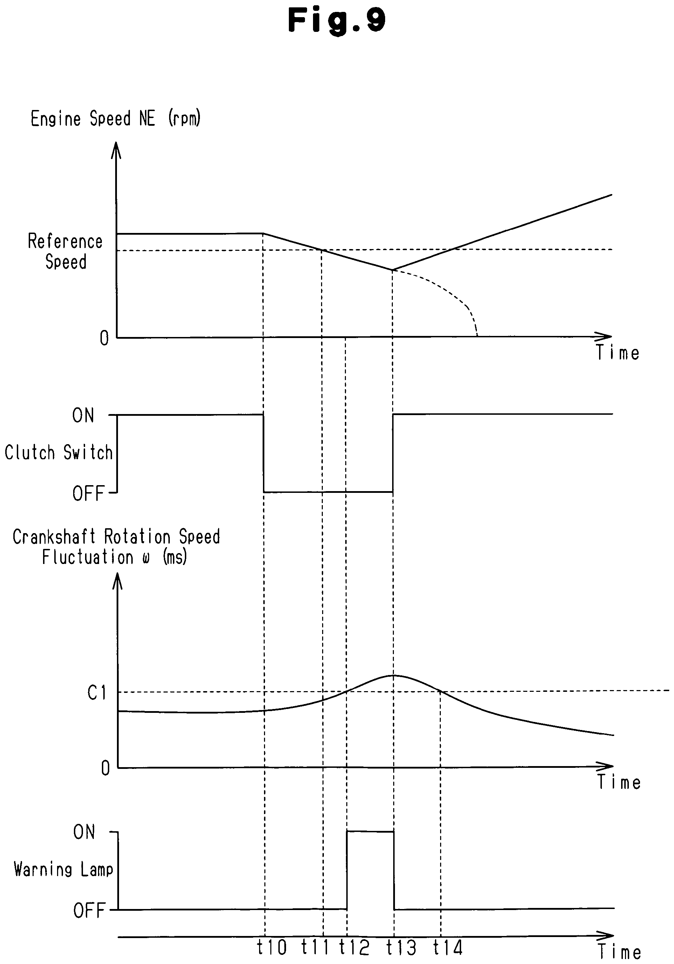

One example of the processing performed in this embodiment is shown in the timing chart of Fig. 9. In this example, before timing t10, the MT 28 is in the first gear, the clutch 26 is in a disengaged state, and the engine speed NE has not been decreased. When the driver engages the clutch 26 to move the vehicle, the clutch switch is deactivated at timing t10. This starts to lower the engine speed NE. At timing t11, the engine speed NE becomes lower than the reference speed.

As the engine speed NE further approaches the resonance point of the DMF 24, the crankshaft rotation speed fluctuation ω becomes greater and ω > C1 becomes satisfied at timing t12. This lights the warning lamp and prompts the driver to disengage the clutch. Then, at timing t13, the driver who recognizes the lighting of the warning lamp disconnects the clutch 26. This turns off the warning lamp and raises the engine speed NE. Thus, the crankshaft rotation speed fluctuation ω decreases and satisfies ω ≤ C1 at timing t14.

In the third embodiment, the ECU 30 corresponds to a crankshaft rotation speed fluctuation detection means and a prompting means. The detection process of the crankshaft rotation speed fluctuation ω shown in Fig. 3 corresponds to a process serving as a crankshaft rotation speed fluctuation detection means, and steps S304 to S310 of the resonance warning process shown in Fig. 8 correspond to a process serving as a prompting means.

The third embodiment has the advantages described below.

(1) When engagement of the clutch 26 increases the crankshaft rotation speed fluctuation ω, that is, when the engine speed NE decreases and approaches the resonance point of the DMF 24, the clutch 26 is disengaged to increase the engine speed NE. Thus, the engine speed NE is separated from the resonance point of the DMF 24.

The ECU 30 accurately determines whether the DMF 24 is in an initial stage of resonance and thereby prompts the driver to disengage the clutch 26 at an appropriate timing so as to avoid resonance of the DMF 24.

[Fourth Embodiment]

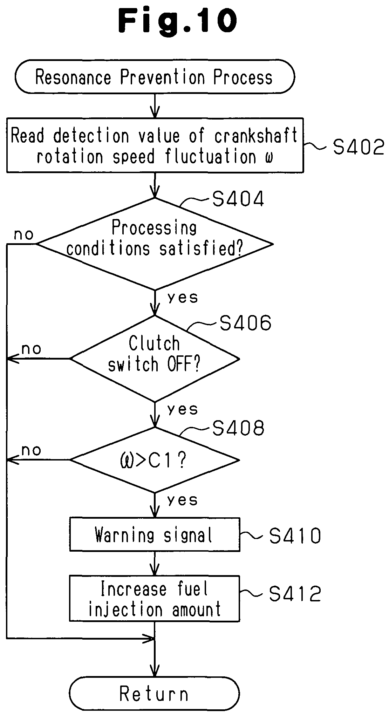

In the fourth embodiment, the resonance prevention process shown in Fig. 10 is executed in constant cycles in lieu of the process in the third embodiment that is shown in Fig. 8. Otherwise, the fourth embodiment is the same as the third embodiment and will thus be discussed with reference to Figs. 1 and 3.

Steps S402 to S410 of the resonance prevention process shown in Fig. 10 are respectively identical to steps S302 to S310 in Fig. 8. However, there is an addition process performed after step S410. When ω > C1 is satisfied in step S408, the ECU 30 proceeds to step S410 and generates a warning signal to prompt the driver to disengage the clutch 26. Then, the ECU 30 proceeds to step S412 and performs a fuel injection amount increasing process.

The fuel injection amount increasing process raises the engine speed NE, which has once started to fall due to the engagement of the clutch 26, by increasing the output of the engine 2 even when before disengaging the clutch 26. Accordingly, the driver is prompted to disengage the clutch, and the engine speed NE is actively separated from the resonance point of the DMF 24.

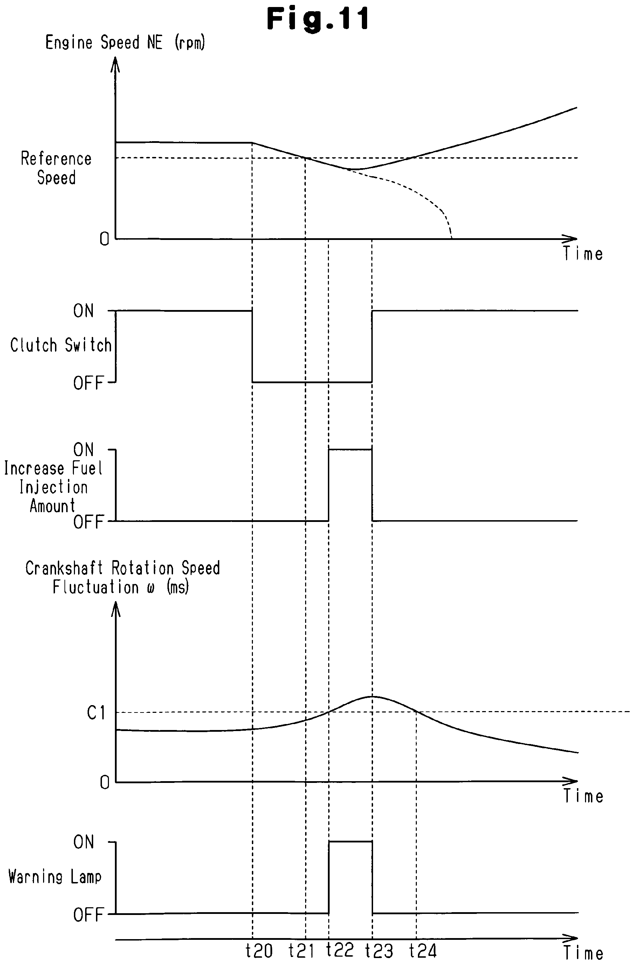

One example of the processing performed in this embodiment is shown in the timing chart of Fig. 11. In this example, before timing t20, the MT 28 is in the first gear, the clutch 26 is in a disengaged state, and the engine speed NE has not been decreased. When the driver engages the clutch 26 to drive the vehicle, the clutch switch is deactivated at timing t20. This starts to lower the engine speed NE. At timing t21, the engine speed NE becomes lower than the reference speed.

As the engine speed NE approaches the resonance point of the DMF 24, the crankshaft rotation speed fluctuation w becomes greater and ω > C1 becomes satisfied at timing t22. Thus, the warning lamp goes on and prompts the driver to disengage the clutch in step S410. Further, the fuel injection amount is increased in step S412. This slows down the decreasing of the engine speed NE.

At timing t23, the driver who recognizes the lighting of the warning lamp disconnects the clutch 26. This turns off the warning lamp and stops the increase of the fuel injection amount. Subsequently, the engine speed NE rises and ω ≤ C1 is satisfied at timing t24.

In the fourth embodiment, the ECU 30 corresponds to a crankshaft rotation speed fluctuation detection means, a prompting means, and an internal combustion engine output increasing means. The detection process of the crankshaft rotation speed fluctuation w shown in Fig. 3 corresponds to a process serving as a crankshaft rotation speed fluctuation detection means, steps S404 and S410 of the resonance prevention process of Fig. 10 correspond to a process serving as a prompting means, and steps S404 to S408, and S412 correspond to a process serving as the internal combustion engine output increasing means.

The fourth embodiment has the advantages described below.

(1) In addition to the advantages of the third embodiment, the engine speed NE is raised by increasing the fuel injection amount when the engine speed NE approaches the resonance point of the DMF 24. This separates the engine speed NE from the resonance point of the DMF 24 even before the driver disconnects the clutch 26.

[Other Embodiments]

(a) In each of the above embodiments, the predetermined processing conditions of steps S104, S204, S304, and S404 are defined as the engine speed NE being lower than the reference speed, which is set to a value that is lower than the engine stall prevention threshold speed and higher than the resonance rotation speed of the DMF 24. Further conditions that may be added include the logical addition conditions of "the brake being depressed (brake switch being activated)", "the vehicle speed being lower than a reference vehicle speed or the engine speed NE being lower than a reference engine speed corresponding to the vehicle speed when the clutch is in an engaged state", and "the vehicle climbing a slope". Therefore, when one of these conditions is satisfied, the ECU 30 determines that the predetermined processing conditions of steps S104, S204, S304, and S404 are satisfied.

From the condition of "the brake being depressed (brake switch being activated)", fluctuations in the crankshaft rotation speed can be identified as occurring during a braking state or an acceleration state. This enables accurate determination of the DMF 24 being in an initial resonance stage during braking of the vehicle.

From the condition of "the vehicle speed being lower than a reference vehicle speed or the engine speed NE being lower than a reference engine speed corresponding to the vehicle speed when the clutch is in an engaged state", a decrease in the engine speed can be determined from the engagement of the clutch when the vehicle starts to move. This enables accurate determination of the DMF 24 being in an initial resonance stage when the vehicle starts to move.

From the condition of "the vehicle climbing a slope", a decrease in the engine speed when the vehicle is climbing a slope can be determined. This enables accurate determination of the DMF 24 being in an initial resonance stage when the vehicle is climbing a slope.

(b) A clutch stroke sensor may be arranged in place of the clutch switch in the third and fourth embodiments, and a half-engaged state (half-clutch) may be detected along with the engaged state of the clutch 26. In this case, affirmative determinations are made when the clutch 26 is in the engaged state or half-engaged state in step S306 of the resonance warning process shown in Fig. 8 or in step S406 of the resonance prevention process shown in Fig. 10.

(c) In the detection process of the crankshaft rotation speed fluctuation shown in Fig. 3, the peak value of the crankshaft rotational acceleration varies cooperatively with the fluctuations of the rotation speed. Thus, the peak value of the rotational acceleration in the crankshaft 2a is obtained without directly obtaining the amplitude of the vibration of the crankshaft rotation speed. Actually, the peak value of the variation range of the rotation time at a constant angle of the crankshaft is obtained as a value corresponding to the peak value of the rotational acceleration. However, the rotational acceleration itself may be detected, and the peak value thereof may be directly used in the detection process of the crankshaft rotation speed fluctuation.

Furthermore, the peak value of rotation speed oscillation may be detected, and the amplitude in the crankshaft rotation speed oscillation may be calculated with the height of the peak value from the average rotation speed and be used as the level of fluctuation in the crankshaft rotation speed.

The crankshaft rotation speed fluctuation corresponds to the fluctuation of the workload of the crankshaft 2a. Therefore, in the detection process of the crankshaft rotation speed fluctuation, the fluctuation in the workload of the crankshaft 2a may be calculated, and the peak in the fluctuation of the workload may be obtained in lieu of the crankshaft rotation speed fluctuation $\omega$. Therefore, determination can be made in each resonance prevention process of Figs. 2, 5, and 10 and the resonance warning process in Fig. 8 using the peak value in the fluctuation of the workload. The value obtained by squaring the time change $\Delta\theta$ of the crankshaft rotation speed $\theta$ corresponds to the workload, and thus the resonance state may be determined using the value of the square of $\Delta\theta$. The rotation speed $\theta$ or the time change $\Delta\theta$ may be calculated from the pulse time interval T or the time interval variation dT.

**Claims**

1. A controller for an internal combustion engine (2) that transmits output to a drive system with a dual mass flywheel (24), the controller including:

   a rotation speed fluctuation detection means (30) adapted to detect a peak value of a rotational acceleration of a crankshaft (2a) in the internal combustion engine (2); and
   an output fluctuation reduction means (30) adapted to reduce or eliminate fluctuations in the output of the internal combustion engine (2) when the peak value of the rotational acceleration of the crankshaft (2a) detected by the rotation speed fluctuation detection means (30) becomes greater than a first reference value (A1); wherein:

   the first reference value (A1) is an initial reference value representing a state in which the engine speed approaches a value that may cause resonance of the dual mass fly wheel (24); and
   when the peak value of the rotational acceleration of the crankshaft (2a) is greater than the first reference value (A1), the output fluctuation reduction means (30) reduces fluctuations in the output of the internal combustion engine (2) by reducing the amount of intake air for the internal combustion engine (2) or reducing a fuel injection amount.

**2.** The controller according to claim 1, wherein:

the internal combustion engine (2) is a diesel engine including a throttle valve (12); and the output fluctuation reduction means (30) is adapted to reduce the amount of intake air for the internal combustion engine (2) by decreasing an open degree of the throttle valve (12).

**3.** The controller according to claim 1, wherein the output fluctuation reduction means (30) is adapted to one of:

reduce fluctuations in the output of the internal combustion engine (2) by reducing the amount of fuel supplied to the internal combustion engine (2);
reduce or eliminate fluctuations in the output of the internal combustion engine (2) by stopping fuel supply to the internal combustion engine (2); and
reduce or eliminate fluctuations in the output of the internal combustion engine (2) by executing two of or all of a process for reducing the amount of intake air for the internal combustion engine (2), a process for reducing the amount of fuel supplied to the internal combustion engine (2), and a process for stopping fuel supply to the internal combustion engine (2).

**4.** The controller according to claim 3, wherein:

the internal combustion engine (2) is a diesel engine; and
fuel is supplied by injecting fuel into a combustion chamber from a fuel injection valve (4).

**5.** The controller according to any one of claims 1 to 4, further including:

a rotation speed detection means (32) for detecting engine speed of the internal combustion engine (2); wherein
the output fluctuation reduction means (30) is adapted to function when the engine speed detected by the rotation speed detection means (32) is lower than a reference speed that is set to be lower than an engine stall prevention threshold speed, which is set to prevent engine stall, and higher than a resonance rotation speed of the dual mass flywheel (24).

**6.** The controller according to any one of claims 1 to 4, wherein the internal combustion engine (2) is for driving a vehicle; and the output fluctuation adjustment means (30) is adapted to one of:

function when the vehicle is undergoing braking;

function when the speed of the vehicle is lower than or equal to a reference vehicle speed or the engine speed is lower than or equal to the reference speed in a state in which a clutch (26) is engaged or half-engaged; and
function when the vehicle is climbing a slope.

**7.** The controller according to any one of claims 1 to 6, wherein the rotation speed fluctuation detection means (30) is adapted to measure rotation time for a constant angle of a crankshaft (2a), and detect a peak value of changes in the rotation time as the peak value of the rotational acceleration of the crankshaft in the internal combustion engine (2).

**Patentansprüche**

**1.** Steuergerät für einen Verbrennungsmotor (2), der eine Ausgabe an ein Antriebssystem mit einem Zweimassenschwungrad (24) überträgt, wobei das Steuergerät enthält:

ein Rotationsgeschwindigkeitsschwankungsdetektionsmittel (30), das angepasst ist, um einen Spitzenwert einer Rotationsbeschleunigung einer Kurbelwelle (2a) in dem Verbrennungsmotor (2) zu detektieren, und
ein Ausgabeschwankungsreduzierungsmittel (30), das angepasst ist, um Schwankungen in der Ausgabe des Verbrennungsmotors (2) zu reduzieren oder beseitigen, wenn der Spitzenwert der Rotationsbeschleunigung der Kurbelwelle (2a), der durch das Rotationsgeschwindigkeitsschwankungsdetektionsmittel (30) detektiert wird, größer als ein erster Referenzwert (A1) wird, wobei:

der erste Referenzwert (A1) ein Ausgangsreferenzwert ist, der einen Zustand repräsentiert, in dem sich die Motordrehzahl einem Wert nähert, der eine Resonanz des Zweimassenschwungrads (24) verursachen kann, und
wenn der Spitzenwert der Rotationsbeschleunigung der Kurbelwelle (2a) größer als der erste Referenzwert (A1) ist, das Ausgabeschwankungsreduzierungsmittel (30) Schwankungen in der Ausgabe des Verbrennungsmotors (2) durch ein Reduzieren der Menge von Ansaugluft für den Verbrennungsmotor (2) oder ein Reduzieren einer Kraftstoffeinspritzungsmenge reduziert.

**2.** Steuergerät gemäß Anspruch 1, wobei:

der Verbrennungsmotor (2) ein Dieselmotor, der ein Drosselventil (12) enthält, ist, und
das Ausgabeschwankungsreduzierungsmittel (30) angepasst ist, um die Menge von Ansaugluft für den Verbrennungsmotor (2) durch ein Verringern eines Öffnungsgrads des Drosselventils (12) zu reduzieren.

**3.** Steuergerät gemäß Anspruch 1, wobei das Ausgabeschwankungsreduzierungsmittel (30) an eine der Tätigkeiten angepasst ist:

Reduziere Schwankungen in der Ausgabe des Verbrennungsmotors (2) durch ein Reduzieren der Menge von Kraftstoff, die an den Verbrennungsmotor (2) geliefert wird,
Reduziere oder Beseitige Schwankungen in der Ausgabe des Verbrennungsmotors (2) durch ein Stoppen einer Kraftstoffzufuhr an den Verbrennungsmotor (2), und
Reduziere oder Beseitige Schwankungen in der Ausgabe des Verbrennungsmotors (2) durch ein Ausführen von zwei oder von allen der Prozesse, Prozess für ein Reduzieren der Menge von Ansaugluft für den Verbrennungsmotor (2), Prozess für ein Reduzieren der Menge von Kraftstoff, die an den Verbrennungsmotor (2) geliefert wird, und Prozess für ein Stoppen einer Kraftstoffzufuhr an den Verbrennungsmotor (2).

**4.** Steuergerät gemäß Anspruch 3, wobei:

der Verbrennungsmotor (2) ein Dieselmotor ist, und
Kraftstoff durch ein Einspritzen von Kraftstoff in eine Brennkammer von einem Kraftstoffeinspritzventil (4) zugeführt wird.

**5.** Steuergerät gemäß einem der Ansprüche 1 bis 4, das des Weiteren enthält:

ein Rotationsgeschwindigkeitsdetektionsmittel (32) für ein Detektieren einer Motordrehzahl des Verbrennungsmotors (2), wobei
das Ausgabeschwankungsreduzierungsmittel (30) angepasst ist, um in Betrieb zu sein, wenn die Motordrehzahl, die durch das Rotationsgeschwindigkeitsdetektionsmittel (32) detektiert wird, niedriger als eine Referenzgeschwindigkeit, die festgesetzt ist, um niedriger als eine Motorabwürgungsverhinderungsschwellengeschwindigkeit, die festgesetzt ist, um eine Motorabwürgung zu verhindern, und höher als eine Resonanzrotationsgeschwindigkeit des Zweimassenschwungrads (24) zu sein, ist.

**6.** Steuergerät gemäß einem der Ansprüche 1 bis 4, wobei der Verbrennungsmotor (2) da ist, um ein Fahrzeug anzutreiben, und das Ausgabeschwankungsanpassungsmittel (30) an eine der Tätigkeiten angepasst ist:

in Betrieb sein, wenn das Fahrzeug eine Bremsung durchläuft,
in Betrieb sein, wenn die Geschwindigkeit des Fahrzeugs niedriger als eine Referenzfahrzeuggeschwindigkeit oder gleich dieser ist, oder die Motordrehzahl niedriger als die Referenzgeschwindigkeit oder gleich dieser ist, und zwar in einem Zustand, in dem eine Kupplung (26) in Eingriff oder halb in Eingriff ist, und
in Betrieb zu sein, wenn das Fahrzeug eine Steigung bergauf fährt.

**7.** Steuergerät gemäß einem der Ansprüche 1 bis 6, wobei das Rotationsgeschwindigkeitsschwankungsdetektionsmittel (30) angepasst ist, um eine Rotationszeit für einen konstanten Winkel einer Kurbelwelle (2a) zu messen und einen Spitzenwert von Änderungen in der Rotationszeit als den Spitzenwert der Rotationsbeschleunigung der Kurbelwelle in dem Verbrennungsmotor (2) zu detektieren.

**Revendications**

**1.** Contrôleur pour un moteur à combustion interne (2) qui transmet la sortie à un système d'entraînement avec un volant d'inertie à deux masses (24), le contrôleur comprenant :

un moyen de détection de fluctuations de vitesse de rotation (30) adapté pour détecter une valeur de crête d'une accélération de rotation d'un vilebrequin (2a) dans le moteur à combustion interne (2) ; et
un moyen de réduction de fluctuation de sortie (30) adapté pour réduire ou supprimer des fluctuations dans la sortie du moteur à combustion interne (2) lorsque la valeur de crête de l'accélération de rotation du vilebrequin (2a) détectée par le moyen de détection de fluctuations de vitesse de rotation (30) devient supérieure à une première valeur de référence (A1) ; dans lequel :
la première valeur de référence (A1) est une valeur de référence initiale représentant un état dans lequel la vitesse du moteur s'approche d'une valeur qui peut provoquer la résonance du volant d'inertie à deux masses (24) ; et
lorsque la valeur de crête de l'accélération de rotation du vilebrequin (2a) est supérieure à la première valeur de référence (A1), le moyen de réduction de fluctuation de sortie (30) réduit les fluctuations dans la sortie du moteur à combustion interne (2) en réduisant la quantité d'air d'admission pour le moteur à combustion interne (2) ou en réduisant une quantité d'injection de carburant.

2. Contrôleur selon la revendication 1, dans lequel :

le moteur à combustion interne (2) est un moteur diesel comprenant un papillon des gaz (12) ; et le moyen de réduction de fluctuation de sortie (30) est adapté pour réduire la quantité d'air d'admission pour le moteur à combustion interne (2) en diminuant un degré d'ouverture du papillon des gaz (12).

3. Contrôleur selon la revendication 1, dans lequel le moyen de réduction de fluctuations de sortie (30) est adapté à l'un parmi :

réduire les fluctuations dans la sortie du moteur à combustion interne (2) en réduisant la quantité de carburant amené au moteur à combustion interne (2) ;
réduire ou supprimer les fluctuations dans la sortie du moteur à combustion interne (2) en arrêtant l'alimentation en carburant au moteur à combustion interne (2) ; et
réduire ou supprimer les fluctuations dans la sortie du moteur à combustion interne (2) en exécutant deux processus ou la totalité des processus parmi un processus pour réduire la quantité d'air d'admission pour le moteur à combustion interne (2), un processus pour réduire la quantité de carburant amené au moteur à combustion interne (2), et un processus pour arrêter l'alimentation en carburant au moteur à combustion interne (2).

4. Contrôleur selon la revendication 3, dans lequel :

le moteur à combustion interne (2) est un moteur diesel ; et
le carburant est alimenté en injectant le carburant dans une chambre de combustion à partir d'une soupape d'injection de carburant (4).

5. Contrôleur selon l'une quelconque des revendications 1 à 4, comprenant en outre :

un moyen de détection de vitesse de rotation (32) pour détecter la vitesse de moteur du moteur à combustion interne (2) ; dans lequel le moyen de réduction de fluctuation de sortie (30) est adapté pour fonctionner lorsque la vitesse du moteur détectée par le moyen de détection de vitesse de rotation (32) est inférieure à une vitesse de référence qui est déterminée pour être inférieure à une vitesse de seuil de prévention de calage de moteur, qui est déterminée pour empêcher le calage du moteur, et supérieure à une vitesse de rotation de résonance du volant d'inertie à deux masses (24).

6. Contrôleur selon l'une quelconque des revendications 1 à 4, dans lequel le moteur à combustion interne (2) est prévu pour entraîner un véhicule ; et le moyen d'ajustement de fluctuation de sortie (30) est adapté pour l'un parmi :

fonctionner lorsque le véhicule subit un freinage ;
fonctionner lorsque la vitesse du véhicule est inférieure ou égale à une vitesse de véhicule de référence ou que la vitesse du moteur est inférieure ou égale à la vitesse de référence dans un état dans lequel un embrayage (26) est mis en prise ou à moitié mis en prise ; et
fonctionner lorsque le véhicule gravit une côte.

7. Contrôleur selon l'une quelconque des revendications 1 à 6, dans lequel le moyen de détection de fluctuations de vitesse de rotation (30) est adapté pour mesurer le temps de rotation pour un angle constant d'un vilebrequin (2a), et détecter une valeur de crête des changements dans le temps de rotation en tant que valeur de crête de l'accélération de rotation du vilebrequin dans un moteur à combustion interne (2).

# Fig.1

Display Unit — 36

Vehicle Speed Sensor,
Accelerator Pedal Depression Sensor,
Brake Switch, Clutch Switch,
Intake Airflow Sensor,
Fuel Pressure Sensor,
Other Sensors and Switches

ECU — 30

MT — 28

26

22a
24b
22a

24 { 22
20 { 24a }
        24a

22
22a
24a
24a

32
20a
2
2a
4
6
4
EG
8
16
EGR Gas
18
12
10
14
34
Intake Air

EP 2 031 223 B1

# Fig.2

Resonance Prevention Process

Read detection value of crankshaft rotation speed fluctuation ω  — S102

Processing conditions satisfied? — S104
no → (branch to Return)
yes

ω>A1? — S106
no → (branch to Return)
yes

Reduce open degree of throttle — S108

ω>A2? — S110
no → (branch to Return)
yes

ω>A3? — S112
no → Reduce fuel injection amount and limit output — S114
yes

Cut fuel and stop engine — S116

Return

14

# Fig.3

```
        ┌─────────────────────────────┐
        │   Crankshaft Rotation Speed  │
        │ Fluctuation ω Detection Process │
        └─────────────────────────────┘
                       │
                       ▼
        ┌─────────────────────────┐
        │ Read pulse time interval T │──── S152
        └─────────────────────────┘
                       │
                       ▼
          ┌──────────────────┐
          │  dT←|T-Told|     │──── S154
          └──────────────────┘
                       │            ── S156
                       ▼
              ◇─────────────────◇        no
             ╱    dT≦dTold?      ╲──────────┐
              ◇─────────────────◇          │
                       │                     │
                      yes   ── S158          │
                       ▼                     │
              ◇─────────────────◇     no     │
             ╱   dTold>dTold2?    ╲──────────┤
              ◇─────────────────◇           │
                       │                     │
                      yes                    │
                       ▼                     │
          ┌──────────────────┐              │
          │    ω←dTold        │──── S160     │
          └──────────────────┘              │
                       │                     │
                       ◄─────────────────────┘
                       ▼
          ┌──────────────────┐
          │  dTold2←dTold    │──── S162
          └──────────────────┘
                       │
                       ▼
          ┌──────────────────┐
          │    dTold←dT      │──── S164
          └──────────────────┘
                       │
                       ▼
          ┌──────────────────┐
          │    Told←T        │──── S166
          └──────────────────┘
                       │
                       ▼
          ┌──────────────────┐
          │     Return       │
          └──────────────────┘
```

# Fig.4

Engine Speed NE (rpm)

Crankshaft Rotation Speed Fluctuation ω (ms)

A3
A2
A1

Fuel Injection Amount (mm3/st)

Throttle Opening degree (%)

100

t0  t1  t2

Time

16

# Fig.5

Resonance Prevention Process

Read detection value of crankshaft rotation speed fluctuation $\omega$ — S202

S204

Processing conditions satisfied?

no

yes — S206

$\omega > B1$ ?

no

yes — S208

$\omega > B2$ ?

no

yes — S212

Stop engine by completely closing throttle and cutting fuel

S210

Output fluctuation frequency changing process based on crank angle

Return

**Fig.6A**

**Fig.6B**

**Fig.6C**

**Fig.6D**

**Fig.7A**

**Fig.7B**

**Fig.7C**

**Fig.7D**

# Fig.8

Resonance Prevention Warning Process

Read detection value of crankshaft rotation speed fluctuation ω —— S302

S304

Processing conditions satisfied?
no

yes

S306

Clutch switch OFF?
no

yes

S308

(ώ)>C1?
no

yes

Warning signal —— S310

Return

# Fig.9

Engine Speed NE (rpm)

Reference
Speed

0

Time

ON

Clutch Switch

OFF

Crankshaft Rotation Speed
Fluctuation ω (ms)

C1

0

Time

ON

Warning Lamp

OFF

t10  t11 t12  t13  t14

Time

# Fig.10

```
          ┌─────────────────────────────┐
          │  Resonance Prevention Process │
          └─────────────────────────────┘
                         │
                         ▼
        ┌─────────────────────────────────┐
        │ Read detection value of crankshaft │ ～ S402
        │   rotation speed fluctuation ω    │
        └─────────────────────────────────┘
                         │
                         ▼       ～S404
no              ◇ Processing ◇
◄───────────────  conditions satisfied?
                         │ yes
                         ▼       ～S406
no               ◇ Clutch ◇
◄──────────────── switch OFF?
                         │ yes
                         ▼       ～S408
no                 ◇ ω>C1 ? ◇
◄───────────────
                         │ yes
                         ▼
              ┌──────────────────┐
              │  Warning signal   │ ～ S410
              └──────────────────┘
                         │
                         ▼
              ┌──────────────────┐
              │  Increase fuel    │ ～ S412
              │ injection amount  │
              └──────────────────┘
                         │
                         ▼
              ┌──────────────────┐
              │      Return       │
              └──────────────────┘
```

# Fig.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005054601 A
- JP 2006183484 A

- JP H09217639 A